(19) Europäisches Patentamt / European Patent Office / Office européen des brevets

(11) **EP 4 043 745 B1**

(12) **EUROPÄISCHE PATENTSCHRIFT**

(45) Veröffentlichungstag und Bekanntmachung des Hinweises auf die Patenterteilung:
**18.12.2024   Patentblatt 2024/51**

(21) Anmeldenummer: **21156521.3**

(22) Anmeldetag: **11.02.2021**

(51) Internationale Patentklassifikation (IPC):
**F16C 19/26** *(2006.01)*      **F16C 33/58** *(2006.01)*
**F16C 33/62** *(2006.01)*      **F16C 33/64** *(2006.01)*

(52) Gemeinsame Patentklassifikation (CPC):
**F16C 19/26; C23C 4/02; C23C 4/08; C23C 4/129; C23C 4/14; C23C 4/16; C23C 4/18; C23C 28/02; C23C 28/021; C23C 28/023; F16C 33/585; F16C 33/62; F16C 33/64;** F16C 2202/04; F16C 2204/46;      (Forts.)

(54) **BAUTEIL EINES WÄLZLAGERS UND VERFAHREN ZU SEINER HERSTELLUNG**

COMPONENT FOR PROVIDING A ROLLER BEARING AND METHOD OF MANUFACTURING THE SAME

COMPOSANT POUR LA FOURNITURE D'UN PALIER À ROULEAUX ET SON PROCÉDÉ POUR SA FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.08.2022   Patentblatt 2022/33**

(73) Patentinhaber: **RHEIN-RUHR Beschichtungs-Service GmbH 47495 Rheinberg (DE)**

(72) Erfinder:
• **Paul, Stephen 45133 Essen (DE)**
• **Pischek, Tim 47495 Rheinberg (DE)**

(74) Vertreter: **Cohausz & Florack Patent- & Rechtsanwälte Partnerschaftsgesellschaft mbB Bleichstraße 14 40211 Düsseldorf (DE)**

(56) Entgegenhaltungen:
**EP-A1- 2 669 399        WO-A1-2014/139941**
**WO-A1-2016/011218       DE-A1- 102009 023 818**
**DE-A1- 102013 223 677    DE-T5- 112015 002 677**
**GB-A- 2 514 445          US-A- 5 439 297**
**US-A1- 2020 408 261**

(52) Gemeinsame Patentklassifikation (CPC): (Forts.)
F16C 2223/42; F16C 2223/46

**Beschreibung**

Die Erfindung betrifft ein Bauteil eines Wälzlagers mit mindestens einem Wälzkörper aufweisend ein Grundsubstrat aus Metall mit mindestens einem Oberflächenbereich, welcher als Lagerfläche eines Wälzlagers mit mindestens einem Wälzkörper ausgebildet ist. Darüber hinaus betrifft die Erfindung ein Verfahren zur Herstellung eines Bauteils mit mindestens einem beschichteten Oberflächenbereich, bei welchem die Beschichtung des Oberflächenbereichs des Bauteils, welcher zur Bereitstellung einer Lagerfläche eines Wälzlagers dient, durch ein Hochgeschwindigkeitsflammspritzen aufgebracht wird und die Beschichtung nach dem Hochgeschwindigkeitsflammspritzen einer spanenden Oberflächenbearbeitung unterzogen wird.

Wälzlager sind Maschinenelemente, welche als Lagerkörper sogenannte Wälzkörper und in der Regel einen Innen- und Außenring als Lagerflächen aufweisen, auf denen die Wälzkörper abrollen. Die Wälzkörper können beispielsweise Kugel- oder Zylinderform aufweisen. Andere Formen, wie zum Beispiel Tonnen- oder Kegel-Formen sind auch denkbar. Wälzlager weisen beispielsweise auch Rollenbahnen in Schienenführungen anstelle von Innen- oder Außenringen auf, so dass die Wälzköper geführte Bewegungen auf den Schienenführungen durchführen. Diese Bauform von Wälzlagern wird beispielsweise zur Bewegung von Flügelklappen von Flugzeugen verwendet. Hier werden häufig Zylinderrollen als Wälzkörper verwendet, welche in Schienenführungen als Rollenbahn geführt werden und bei sehr hoher Last beispielsweise eine Bewegung der Flügelklappen gewährleisten. Die Zylinderrollen können im Vergleich zu Wälzkörpern in Kugelform höhere Radialkräfte im Wälzlager aufnehmen, weil diese als Wälzkontakt eine Kontaktlinie mit größerer Kontaktfläche bereitstellen. Bei gleicher Radialkraft erzeugt die Kontaktfläche des Linienkontakts im Vergleich zum punktförmigen Kontakt einer Kugel im Wälzlager geringere Druckverhältnisse im Wälzkontakt. Abhängig von den Druckverhältnissen entsteht jedoch in Folge der Last eine Formänderung der Wälzkörper und der Lagerflächen, die sogenannte "Hertzsche Verformung", welche zur Werkstoffanstrengung, Ermüdung bis zum Verschleiß der Lagerpartner führen kann. Insbesondere bei kritischen Schmierstoffbedingungen, also wenn nur wenig oder gar kein Schmierstoff im Wälzkontakt vorhanden ist und sehr hoher Lastaufnahme, kommt es auf die Verschleißeigenschaften der in Kontakt stehenden Werkstoffe der Lagerfläche und der Wälzköper an. Die Lagerflächen von Wälzlagern werden daher aus besonders verschleißarmen, zum Beispiel besonders harten Materialien hergestellt. Sehr harte Materialien sind jedoch in der Regel spröde, so dass vorzugsweise auf duktilen Grundsubstraten ein Oberflächenbereich durch Beschichtung erzeugt wird, welcher besonders hart und daher verschleißfest ist. Neben der Hartverchromung, welche auch im Tauchbad erfolgen kann, hat sich das Beschichten der Lagerbereiche durch thermisches Spritzen von hochverschleißfesten Legierungen als vorteilhaft für gut zugängliche Lagerbereiche herausgestellt.

Beim Hochgeschwindigkeitsflammspritzen wird der aufzubringende Werkstoff durch Auf- oder Anschmelzen, Beschleunigen und Aufspritzen des Werkstoffs mit hoher Geschwindigkeit auf das gereinigte und vorbehandelte Grundsubstrat aufgebracht. Nach dem Aufprall der heißen Beschichtungspartikel auf der Oberfläche des Grundsubstrats erkalten diese und können sich so mit der Oberfläche des Grundsubstrats verklammern. Hierzu wird das Grundsubstrat in der Regel zusätzlich aufgeraut. Das Hochgeschwindigkeitsflammspritzen gehört zu den neueren Verfahren des thermischen Spritzens und wird im Vergleich zum konventionellen Flammspritzen durch einen mit Überschall austretenden Gasstrahl charakterisiert. Dadurch sind die Auftreffgeschwindigkeiten der Teilchen auf das Substrat sehr viel größer, was verbesserte Schichteigenschaften zur Folge hat. Als Brenngase können neben Propan, Propylen, Acetylen und Wasserstoff auch Erdgas oder Flüssigbrennstoffe wie Kerosin verwendet werden. Das Detonationsspritzen wird in der vorliegenden Anmeldung ebenfalls als Hochgeschwindigkeitsflammspritzen betrachtet. Beim Detonationsspritzen wird durch in kurzem zeitlichen Abstand hintereinander gezündete Detonationen des Brennstoffs der Werkstoff auf das Grundsubstrat aufgetragen.

Bisher ist man davon ausgegangen, dass die Oberflächenbeschichtung von Lagerflächen besonders verschleißfrei wird, wenn diese eine möglichst hohe Härte, beispielsweise gemessen in HRc, aufweist. Allerdings kann es dann bei einem der Lagerpartner, Wälzkörper oder Lagerfläche, aufgrund hoher Radialkräfte zur Hertz'schen Pressung und damit zur Verformung des Wälzkörpers oder der Lagerfläche kommen, so dass bei gleichzeitig auftretender Bewegung im Lager ein starker Verschleiß eines der Lagerpartner die Folge ist. Die derzeit verwendeten Beschichtungen beispielsweise aus Wolframkarbid zeigen daher ein verbesserungswürdiges Verschleißverhalten.

Insbesondere bei Transportmitteln, beispielsweise Flugzeugen können sicherheitsrelevante Bauteile von einem verbesserten Verschleißverhalten profitieren. Dies gilt beispielsweise für die sicherheitsrelevanten Rollenlager von Flügelklappen im Flugzeug, welche insbesondere auch bei kritischen Schmierstoffbedingungen noch eine sichere Funktion gewährleisten müssen.

Die deutsche Offenlegungsschrift DE 10 2009 023 818 A1 offenbart Wälzlager mit verschleißarmen Lagerflächen, die eine chemisch abgeschiedene Nickelphosphorschicht aufweisen.

Die internationale Patentanmeldung WO 2016/011218 A1 betrifft verschleiß optimierte Lagerflächen, welche aus unterschiedlich harten Bereichen aufgebaut sind. Die Beschichtung wird durch Besprühen der Lagerfläche mit einer Kohlenstoffpartikel enthaltenden Flüssigkeit mit anschließender Laserbehandlung zum eindiffundieren der Partikel bereitgestellt.

Die US-Patentanmeldung US 2020/0408261 A1 offenbart eine dreischichtige Beschichtung einer Lagerfläche, welche aus einem auf dem Lagerbauteil aufgebrachten im Wesentlichen Chrom enthaltenen Schicht, einer ersten gemischten Beschichtung mit abnehmenden Wolframoxidanteil und einer weiteren Oberflächenschicht mit Diamant ähnlichem Karbonpartikeln (DLC) mit unterschiedlichen Härten besteht.

Die deutsche Offenlegungsschrift DE 10 2013 223 677 A1 betrifft ein leicht zu fertigendes, elektrisch isolierendes Wälzlager, welches eine Isolationsschicht aus künstlichem oder natürlichem Harz aufweist.

Die internationale Patentanmeldung WO 2014/139941 A1 sowie die GB 2514445 A1 offenbaren Wälzlagerelemente mit mehrschichtigen Beschichtungen aus nichtmetallischen Werkstoffen.

Das US-Patent US 5,439,297 offenbart eine Schienenführung mit einschichtiger Beschichtung der Lagerfläche, während die europäische Patentanmeldung EP 2 669 399 A1 und die deutsche Offenlegungsschrift DE 11 2015 002 677 T5 mehrschichtige Beschichtungen von Lagerflächen offenbaren.

Vor diesem Hintergrund liegt der vorliegenden Erfindung die Aufgabe zugrunde, ein alternatives Bauteil bereitzustellen, welches einen Oberflächenbereich zur Bereitstellung einer Lagerfläche eines Wälzlagers aufweist, dass auch bei Aufnahme sehr hoher Radialkräfte und geringer Schmierstoffbelegung ein deutlich verbessertes Verschleißverhalten aufweist und wirtschaftlich hergestellt werden kann.

Die zuvor genannte Aufgabe wird mit einem Bauteil nach Patentanspruch 1 sowie mit einem Verfahren nach Patentanspruch 12 gelöst.

Erfindungsgemäß weist der mindestens eine Oberflächenbereich des Bauteils eine Beschichtung auf, welche in einem an das Grundsubstrat des ersten Bauteils angrenzenden, ersten Beschichtungsbereich eine erste Härte aufweist und in einem mit dem mindestens einen Wälzköper in Kontakt stehenden, zweiten Beschichtungsbereich eine zweite Härte aufweist und die erste Härte geringer ist als die zweite Härte.

Es hat sich überraschenderweise herausgestellt, dass durch die Verwendung eines weicheren ersten Beschichtungsbereichs angrenzend an das Grundsubstrats in Verbindung mit einem zweiten Beschichtungsbereich, welcher mit dem Wälzkörper den Wälzkontakt ausbildet und eine höhere Härte aufweist, das Verschleißverhalten eines Wälzlagers zur Aufnahme sehr hoher Radialkräfte deutlich verbessert werden konnte.

Die Ursache hierfür wird darin gesehen, dass der weichere erste Beschichtungsbereich eine leichte Verformung des den Kontakt mit dem Wälzkörper aufweisenden, spröderen und härteren Beschichtungsbereichs ermöglicht, ohne dass die Beschichtung des zweiten Beschichtungsbereichs oder die gesamte Beschichtung insgesamt beschädigt wird. Der erste und der zweite Beschichtungsbereich sind auf dem Grundsubstrat in Richtung des Wälzkörpers beginnend mit dem ersten und abschließend mit dem zweiten Beschichtungsbereich beispielsweise als Schichten parallel zum Grundsubstrat ausgebildet, wobei zwischen dem ersten und zweiten Beschichtungsbereich optional auch weitere Beschichtungsbereiche vorgesehen sein können. Aufgrund der Verformung der Lagerfläche wird die Kontaktfläche des Wälzkörpers, beispielsweise der Zylinderrolle oder der Kugel des Wälzlagers mit der Lagerfläche erhöht und so die Druckverhältnisse im Wälzkontakt verbessert. Die einen hohen Verschleiß des Wälzlagers verursachende Hertz'sche Pressung kann aufgrund der höheren Kontaktfläche im Wälzkontakt zu höheren Radialkräften hin verschoben werden, so dass der Verschleiß an beiden Lagerteilen, der Lagerfläche und des Wälzkörpers deutlich verringert wird. Aufgrund der höheren Härte des zweiten Beschichtungsbereichs, welcher mit dem Wälzkörper in Kontakt steht, ist dieser besonders verschleißarm, ohne den Nachteil in Kauf nehmen zu müssen, dass die höhere Härte bei einem Anstieg der Radialkräfte zur Hertz'schen Pressung mit hohem Verschleiß führt. Besonders vorteilhaft ist das erfindungsgemäße Bauteil bei Wälzlagern, welche zum einen hohe Radialkräfte aufnehmen müssen und andererseits schwierige Schmierstoffbedingungen aufweisen. Dies ist, wie bereits erwähnt, insbesondere bei den sicherheitsrelevanten Wälzlagern von Flügelklappen in Flugzeugen der Fall.

Gemäß einer vorteilhaften Ausgestaltung des Bauteils ist die zweite Härte des zweiten Beschichtungsbereichs des Bauteils größer als die Härte des Oberflächenbereichs des mindestens einen Wälzkörpers. Hierdurch wird erreicht, dass der Verschleiß der Lagerfläche abhängig von dem verwendeten Material des Wälzkörpers minimiert wird.

Vorzugsweise weist der mit dem Wälzkörper in Kontakt stehende zweite Beschichtungsbereich im Vergleich mit der Härte des Wälzkörpers, des Grundsubstrats, des ersten Beschichtungsbereichs und optional vorgesehenen weiteren Beschichtungsbereichen zwischen dem ersten und zweiten Beschichtungsbereich die höchste Härte auf. Mit dieser Variante des erfindungsgemäßen Bauteils wurden sehr gute Verschleißergebnisse erzielt.

Weist gemäß einer weiteren Ausgestaltung die Beschichtung des ersten Bauteils zwei oder mehr Schichten mit unterschiedlicher Zusammensetzung zur Bereitstellung des ersten Beschichtungsbereichs mit der ersten Härte und des zweiten Beschichtungsbereichs mit der zweiten Härte auf, kann der erste Beschichtungsbereich an das Grundsubstrat und der zweite Beschichtungsbereich an den mit dem zweiten Beschichtungsbereich in Kontakt stehenden Wälzkörper gezielt angepasst werden. Ein zweischichtiger Aufbau ist dabei die einfachste Schichtfolge, mit welcher die unterschiedlich harten Beschichtungsbereiche der Beschichtung bereitgestellt werden können. Die Dicken der beiden unterschiedlichen Beschichtungsbereiche können beispielsweise zwischen 20 % und 80 % der Gesamtdicke jeweils betragen. Hier kann die Dicke der einzelnen Beschichtungsbereiche noch einmal auf das jeweilige bereitzustellende Wälzlager und die aufzunehmenden Kräfte optimiert werden. Beispielsweise können auch die beiden Beschichtungsbereiche eine identische Dicke aufweisen. Über die Verwendung von mehreren Schichten können die Verschleißeigenschaften des Wälzlagers bei größerem Aufwand zur Bereitstellung weiter optimiert werden.

Es ist darüber hinaus möglich, dass gemäß einer weiteren Ausgestaltung des Bauteils die Beschichtung einen Härtegradienten aufweist, derart, dass die Härte der Beschichtung von dem zum Grundsubstrat des Bauteils angrenzenden, ersten Beschichtungsbereichs zum zweiten Beschichtungsbereich, welcher mit dem Wälzkörper in Kontakt steht, ansteigt, optional kontinuierlich oder schichtweise ansteigt. Beim Hochgeschwindigkeitsflammspritzen beispielsweise ist es möglich, die Beschichtungszusammensetzung im Laufe des Beschichtungsverfahrens optional kontinuierlich oder schichtweise zu ändern, beispielsweise in dem die Zusammensetzung während des Hochgeschwindigkeitsflammenspritzens kontinuierlich oder stufenweise geändert wird. Damit gelingt eine optimale Anpassung des Bauteils an die jeweilige Belastungssituation des Wälzlagers. Gleiches gilt auch zum Beispiel für ein Laserauftragsschweißen von Beschichtungen.

Bevorzugt beträgt die Dicke der gesamten Beschichtung 0,2 mm bis 1,5 mm, bevorzugt 0,4 mm bis 0,8 mm. Durch die relativ geringe Dicke der Beschichtung kann das erfindungsgemäße Bauteil vorteilhaft in Gewicht sensitiven Anwendungen verwendet werden.

Beträgt gemäß einer nächsten Ausgestaltung des Bauteils die erste Härte im an das Grundsubstrat angrenzenden, ersten Beschichtungsbereich maximal 60 HRc und die zweite Härte in dem mit dem Wälzkörper in Kontakt stehenden, zweiten Beschichtungsbereich mindestens 57 HRc kann das Verschleißverhalten auf die üblicherweise verwendeten Materialien für Grundsubstrate und Wälzkörper, hochfeste Edelstähle aber auch hochfeste Titan- oder Aluminiumlegierungen gut abgestimmt werden. Dies gilt beispielsweise für Wälzlager mit Zylinderrollen aus martensitischem Edelstahl, wobei die Zylinderrollen üblicherweise eine Härte von mindestens 40 HRc bis 50 HRc aufweisen. Für den auf dem Grundsubstrat aufgebrachten ersten Beschichtungsbereich wird mit einer maximalen Härte von 60 HRc erreicht, dass der erste Beschichtungsbereich nicht zu spröde ausgebildet wird und damit eine Verformung des darauf angeordneten zweiten Beschichtungsbereichs ermöglicht. Zudem kann durch die Begrenzung der Härte die Haftzugfestigkeit der Beschichtung auf dem Grundsubstrat verbessert werden, da hier eine gewisse Duktilität vorteilhaft ist.

Gemäß einer weiteren Ausgestaltung des Bauteils können hohe Radialkräfte im Wälzlager dadurch aufgenommen werden, dass das erste Bauteil eine Schienenführung zur Aufnahme mindestens einer Zylinderrolle als Wälzkörper eines Wälzlagers ist und der beschichtete Oberflächenbereich sich teilweise oder im gesamten Bewegungsbereich der mindestens einen Zylinderrolle in der Schienenführung erstreckt. Entsprechende Wälzlager mit Schienenführungen als Rollenbahnen für Zylinderrollen werden in Flugzeugen beispielsweise für Flügelklappen verwendet und müssen daher besonders verschleißarm ausgebildet sein.

Es hat sich zudem herausgestellt, dass auch die Haftzugfestigkeit der Beschichtung auf dem Grundsubstrat bei den Verschleißeigenschaften eine wichtige Rolle spielt, um das Ablösen der Beschichtung vom Grundsubstrat zu verhindern. Gemäß einer weiteren Ausgestaltung können besonders verschleißarme Beschichtungen dadurch bereitgestellt werden, dass die Haftzugfestigkeit $R_H$ mehr als 70 MPa beträgt. Die Haftzugfestigkeit $R_H$ wird nach der DIN EN ISO 14916:2017-8 für hochgeschwindigkeitsflammgespritzte Beschichtungen gemessen. Hier hat sich herausgestellt, dass die Aufteilung in zumindest zwei unterschiedliche, lateral angeordnete Beschichtungsbereiche des Grundsubstrats mit einer geringeren Härte im ersten Beschichtungsbereich und einer höheren Härte im zweiten Beschichtungsbereich, zu höheren Haftzugfestigkeiten $R_H$ führt.

Erfindungsgemäß weist die Beschichtung des Oberflächenbereichs mindestens eine metallische Legierung mit folgenden Legierungsbestandteilen in Gew.-% auf:

$$8\% \leq Cr \leq 18,5\,\%,$$

$$22,5\,\% \leq Mo \leq 33\,\%,$$

$$2,55\,\% \leq Si \leq 3,45\%,$$

optional

$$14\,\% \leq Ni \leq 17\,\%,$$

$$C < 0,1\,\%,$$

Rest Co und unvermeidbare Verunreinigungen
oder

$$12\% \leq Cr \leq 19\,\%,$$

$$28\% \leq Mo \leq 36\,\%,$$

$$3\,\% \leq Si \leq 4\,\%,$$

$$0,5\,\% \leq Co \leq 2\,\%,$$

$$C < 0,1\,\%,$$

Rest Ni und unvermeidbare Verunreinigungen.

Die Kobalt oder Nickel basierten Legierungen dieser Ausgestaltung des Bauteils zeigen alle sehr hohe Härten durch Ausbildung sogenannter Laves-Phasen. Dies sind intermetallische Verbindungen der Legierungsbestandteile, welche aufgrund ihrer Kristallstruktur extrem hart und spröde sind. Sie stellen eine hohe Verschleißfestigkeit sicher. Die beschriebenen Kobalt sowie Nickel basierten Legierungen können mit dem Hochgeschwindigkeitsflammspritzen aufgebracht werden und somit beschichtete Oberflächenbereiche des erfindungsgemäßen Bauteils bereitstellen.

Gemäß einer nächsten Ausgestaltung des erfindungsgemäßen Bauteils weist die Beschichtung im ersten Beschichtungsbereich zumindest teilweise eine Mischung aus mindestens einer metallischen Legierung und mindestens einem unlegierten Metall auf, wobei der Gesamtanteil des unlegierten Metalls in der Beschichtung maximal 60 Gew.-%, bevorzugt 15 bis 50 Gew.-% beträgt und das mindestens eine unlegierte Metall Kobalt, Nickel, Chrom, Molybdän, Tantal Kupfer, Aluminium, Indium, Zink oder eine Mischung aus mindestens zwei der genannten Metalle ist.

Es hat sich herausgestellt, dass die Verwendung von unlegiertem Metall, beispielsweise von Nickel, in einer Matrix aus einer Metalllegierung im ersten Beschichtungsbereich die Härte des ersten Beschichtungsbereichs verringern kann und gleichzeitig die Haftzugfestigkeit der Beschichtung steigern kann. Hierdurch kann der erste Beschichtungsbereich optimal an das Grundsubstrat angepasst werden, sodass die gesamte Beschichtung eine sehr hohe Haftzugfestigkeit $R_H$ aufweist.

Unter Verwendung der zuvor genannten Kobalt oder Nickel basierten Legierungssysteme, welche besonders spröde und verschleißarme, intermetallische Laves-Phasen bereitstellen, konnte festgestellt werden, dass das unlegierte Metall eine gewisse Verformbarkeit des ersten Beschichtungsbereichs ermöglichen kann, ohne dass die sehr spröden Laves-Phasen der metallischen Legierung beschädigt werden. Es wird davon ausgegangen, dass hierdurch im Wälzkontakt eine Vergrößerung der Kontaktfläche bewirkt werden kann und so die Verschleißfestigkeit des Bauteils verbessert wird. Es ergibt sich damit eine besonders hohe Verschleißfestigkeit bei sehr hohen Radialkräften im Wälzlager.

Eine nächste vorteilhafte Ausgestaltung des Bauteils kann dadurch bereitgestellt werden, dass die Beschichtung durch Hochgeschwindigkeitsflammspritzen oder Laserauftragsschweißen aufgebracht worden ist. Beim Beschichten eines Werkstoffs führt das verwendete Beschichtungsverfahren zu einer für das Auftragsverfahren spezifischen Struktur der Beschichtung. Dies gilt zum Beispiel für das Hochgeschwindigkeitsflammspritzen, bei welchem die hoch erhitzten Beschichtungspartikel mit extrem hoher Geschwindigkeit auf dem Grundsubstrat beispielsweise auftreffen und dort pfannkuchenartige Strukturen erzeugen, welche aufgrund der sehr hohen Geschwindigkeiten extrem geringe Zwischenräume zwischen diesen Partikeln zulassen. Durch das Erkalten und Verklammern mit dem Grundsubstrat oder erkalteten Beschichtungspartikeln wird die Beschichtung fest mit dem Grundsubstrat verankert. Es ergibt sich eine für das Hochgeschwindigkeitsflammspritzen typische Struktur der Beschichtung. Aufgrund der geringen Fehlstellen der durch Hochgeschwindigkeitsflammspritzen erzeugten Beschichtung kann diese von anders erzeugten Beschichtungen unterschieden werden.

Gemäß einer weiteren Ausgestaltung des Bauteils weist die Beschichtung eine Oberflächenrauheit Ra von mindestens 0,1 μm bis 2,5 μm, bevorzugt 0,1 μm bis 1,2 μm, beispielsweise nach einer spanenden Bearbeitung der Oberfläche zur Bereitstellung eines Wälzlagers auf. Hierdurch können optimale Reibungsbedingungen des Wälzkörpers auf der Lagerfläche bereitgestellt werden.

Weist die Beschichtung gemäß einer weiteren Ausgestaltung eine Porosität von kleiner 1,5 % auf, kann die Beschichtung in den Poren einen Schmierstoff aufnehmen und diesen für die Verringerung der Reibung im Wälzlager zur Verfügung stellen. Die Porosität $\phi$ wird durch folgende Gleichung

$$\phi = 1 - \rho/\rho_0 \qquad\qquad (1)$$

bestimmt, wobei $\rho$ die gemessene Dichte und $\rho_0$ die Reindichte des Materials ist.

Die Verschleißeigenschaft des erfindungsgemäßen Bauteils kann dadurch weiter verbessert werden, dass ein aufgebrachter Schmierstoff vorgesehen ist, welcher die Porosität des Werkstoffs ausnutzt, um dauerhaft den Schmierstoff für ein Wälzlager bereitzustellen.

Schließlich kann das Bauteil dadurch vorteilhaft ausgestaltet werden, dass das Bauteil ein Teil eines Wälzlagers eines Transportmittels, vorzugsweise eines Flugzeugs ist. Wie zuvor bereits ausgeführt, weisen insbesondere Flugzeuge sicherheitsrelevante und mit hohen Radialkräften beaufschlagte Wälzlager auf. Insbesondere Wälzlager mit in Schienenführungen geführten Zylinderrollen, welche beispielsweise bei der Bewegung von Flügelklappen eingesetzt werden, müssen hohe Radialkräfte aufnehmen. Mit dem erfindungsgemäßen Bauteil können die Lagerflächen dieser Wälzlager besonders verschleißarm gestaltet werden.

Die oben aufgezeigte Aufgabe wird für ein Verfahren zur Herstellung eines Bauteils mit mindestens einem beschichteten Oberflächenbereich dadurch gelöst, dass der an das Grundsubstrat angrenzende erste Beschichtungsbereich und der mit dem Wälzkörper in Kontakt stehende, zweite Beschichtungsbereich des Bauteils durch Hochgeschwindigkeitsflammspritzen von unterschiedlichen Beschichtungszusammensetzungen erzeugt wird. Mit dem Hochgeschwindigkeitsflammspritzen können in präziser Art und Weise die Beschichtungsbereiche des beschichteten Oberflächenbereichs des Bauteils hergestellt werden und gleichzeitig die geforderten Eigenschaften, betreffend die Härte und Zusammensetzung der Beschichtung prozesssicher und in wirtschaftlicher Art und Weise bereitgestellt werden. Die Beschichtung muss anschließend an der Oberfläche noch einer spanenden Oberflächenbearbeitung in der Regel durch Fräsen, Schleifen und Polieren bearbeitet werden, um beispielsweise die für das Wälzlager geeigneten Oberflächenrauheiten zur Verfügung zu stellen.

Erfindungsgemäß weist die mindestens eine hochgeschwindigkeitsflammgespritzte, metallische Legierung der Beschichtung folgende Legierungsbestandteile in Gew.-% auf:

$$8\% \leq Cr \leq 18,5\ \%,$$

$$22,5\ \% \leq Mo \leq 33\ \%,$$

$$2,55\ \% \leq Si \leq 3,45\%,$$

optional

$$14\ \% \leq Ni \leq 17\ \%,$$

$$C < 0,1\ \%$$

Rest Co und unvermeidbare Verunreinigungen
oder

$$12\% \leq Cr \leq 19\ \%,$$

$$28\% \leq Mo \leq 36\ \%,$$

$$3\ \% \leq Si \leq 4\ \%,$$

$$0,5\ \% \leq Co \leq 2\ \%,$$

$$C < 0{,}1\ \%$$

Rest Ni und unvermeidbare Verunreinigungen.

Die genannten Kobalt oder Nickel basierten Legierungssysteme stellen, wie bereits ausgeführt, Legierungen bereit, welche einen hohen Anteil an Laves-Phasen bilden, welche besonders hart und verschleißarm sind. Durch Verwendung unterschiedlicher Zusammensetzungen während des Hochgeschwindigkeitsflammspritzen der Beschichtung des ersten Bauteils, kann die Härte der beiden Beschichtungsbereiche auch über die Schichtzusammensetzung eingestellt werden.

Eine weitere Verbesserung der Eigenschaften der Beschichtung kann dadurch erreicht werden, dass die Beschichtung des ersten Beschichtungsbereich durch Hochgeschwindigkeitsflammenspritzen einer Mischung aus mindestens einer metallischen Legierung und mindestens einem unlegierten Metall erzeugt wird, wobei der Gesamtanteil des ungeklärten Metalls in der Beschichtung bereichsweise maximal 60 Gew.-%, bevorzugt 15 bis 50 Gew.-% beträgt und das mindestens eine unlegierte Metall Co, Cr, Mo, Ta, Ni, Cu, Al, In, Zn oder eine Mischung aus mindestens zwei der genannten Metalle ist. Das Hinzufügen von mindestens einem unlegierten Metall zu einem metallischen Legierungssystem während des Hochgeschwindigkeitsflammspritzen führt dazu, dass das unlegierte Metall zu einer Verbesserung der Duktilität und einer Verringerung der Härte des entsprechenden Beschichtungsbereichs führt. So wird bei einer Zugabe von 15 bis 50 Gew.-% Nickel zu einer der oben genannten Legierungssysteme erreicht, dass das unlegierte Nickel aufgrund seiner geringeren Härte, aber höheren Duktilität die vom Legierungssystem ausgebildeten extrem spröden Laves-Phasen bei einer Verformung des ersten Beschichtungsbereichs vor einer Zerstörung schützt. Hierdurch wird erreicht, dass die Kontaktfläche insbesondere beim Auftreten sehr hoher Radialkräfte im Wälzlager vergrößert wird und damit die Flächenpressung insgesamt wiederum verringert wird. Damit können höhere Radialkräfte im Wälzlager aufgenommen werden, ohne dass es zum Verschleiß des Wälzlagers kommt.

Es hat sich gemäß einer weiteren Ausgestaltung des Verfahrens als vorteilhaft herausgestellt, das unlegierte Metall während des Hochgeschwindigkeitsflammenspritzens separat aufzuspritzen oder vor dem Aufspritzen mit der mindestens einen Legierungen vor der Verarbeitung zu agglomerieren oder zu mischen. Beim separaten Aufspritzen sowie beim Agglomerieren des unlegierten Metalls mit der verwendeten metallischen Legierung wird eine besonders gute Verteilung des unlegierten Metalls innerhalb des metallischen Legierungsverbands erreicht, sodass aufgrund der gleichmäßigen Verteilung des unlegierten Metalls in der Matrix der metallischen Legierung sowohl eine deutliche Verbesserung der Haftzugfestigkeit $R_H$ als auch der Bereitstellung eines möglichst verschleißarmen Lagerfläche erreicht wird.

Im Weiteren soll die Erfindung anhand von Ausführungsbeispielen in Verbindung mit der Zeichnung näher erläutert werden. Die Zeichnung zeigt in

Fig. 1    in einer schematischen Schnittansicht ein Ausführungsbeispiel eines Bauteils mit einem Oberflächenbereich zur Bereitstellung einer Lagerfläche eines Wälzlagers,

Fig. 2    eine mikroskopische Aufnahme eines Schnitts durch den beschichteten Oberflächenbereich des Ausführungsbeispiels aus Fig. 1,

Fig. 3    in einer schematischen Schnittansicht eine gebogene Führungsschienen mit Zylinderrollen als Wälzkörper sowie

Fig. 4    eine Schnittansicht des Rollenlagers aus der Fig. 3.

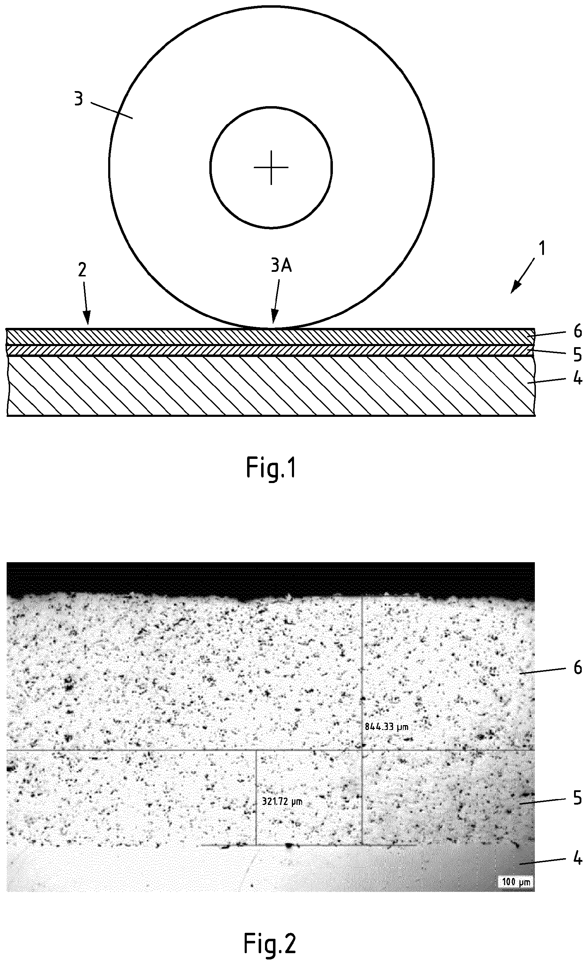

In Fig. 1 ist zunächst in einer schematischen Schnittansicht ein Ausführungsbeispiel eines erfindungsgemäßen Bauteils 1 mit einem Oberflächenbereich dargestellt, welcher zur Bereitstellung einer Lagerfläche 2 eines Wälzlagers mit mindestens einem Wälzkörper 3 ausgebildet ist. Der in der Schnittansicht dargestellte Wälzkörper 3 ist in diesem Ausführungsbeispiel als Zylinderrolle ausgebildet. Das Bauteil 1 weist in dem Oberflächenbereich der Lagerfläche 2 ein Grundsubstrat 4, einen ersten Beschichtungsbereich 5 und mindestens einen zweiten Beschichtungsbereich 6 auf, wobei der erste Beschichtungsbereich 5 an das Grundsubstrat 4 angrenzt und der mindestens zweite Beschichtungsbereich 6 mit dem Wälzkörper 3 in Kontakt steht. Erfindungsgemäß ist die erste Härte des ersten Beschichtungsbereichs 5 kleiner als die Härte des zweiten Beschichtungsbereichs 6. Durch diesen Aufbau wird ermöglicht, dass der weichere Beschichtungsbereich 5 bei hohen Lasten eine leichte Verformung der Lagerfläche 2 bereitstellen kann, ohne dass der ober härtere Beschichtungsbereich 6 beschädigt wird. Dabei kommt es zu einer Vergrößerung des Flächenkontakts des Wälzkörpers 3 im Wälzkontakt 3A. Mit der Vergrößerung der Kontaktfläche geht eine Reduzierung der Flächenpressung im Wälzkontakt einher, so dass kritische Hertz'sche Pressungen verhindert werden können. Im Ergebnis kann eine Verschleißreduzierung bei hohen Radialkräften im Wälzlager erreicht werden, so dass insgesamt der Verschleiß minimiert wird.

Bevorzugt ist die Härte des zweiten Beschichtungsbereichs 6 größer als die Härte des Wälzkörpers, hier also der Zylinderrolle 3. Hierdurch ergeben sich gute Verschleißbedingungen in Bezug auf die Lagerfläche 2 und den Wälzkörper 3 bei einem möglichst einfachen Schichtaufbau. Wie in Fig. 1 zu erkennen ist, weist die Beschichtung genau zwei Beschichtungsbereiche 5 und 6 auf, welche aufgrund der unterschiedlichen Zusammensetzungen unterschiedliche Härten bereitstellen. Generell können aber auch mehrere Beschichtungsbereiche mit unterschiedlichen Zusammensetzungen und Härten verwendet werden, wobei der jeweils mit dem Wälzkörper 3 in Kontakt stehende Beschichtungsbereich 6 eine größere Härte aufweisen sollte, als der Beschichtungsbereich 5, der an das Grundsubstrat angrenzt, um die vorteilhaften Verschleißeigenschaften bereitzustellen.

Ein bevorzugtes Material bei der Herstellung von Wälzkörpern 3 ist beispielsweise martensitischer Edelstahl. Dieser erreicht Härten zwischen 40 und 58 HRc. Der zweite Beschichtungsbereich 6 weist bevorzugt eine Härte von mindestens 57 HRc auf, um ausreichend hohe Härte gegenüber Wälzkörpern 3 aus martensitischem Edelstahl bereitzustellen. Der erste Beschichtungsbereich 5, welcher an das Grundsubstrat angrenzt, sollte dagegen maximal eine Härte von 60 HRc aufweisen, um einerseits die Vergrößerung des Flächenkontakts im Wälzkontakt 3A bei hohen Radialkräften zu ermöglichen und andererseits eine gute Haftung am Grundsubstrat 4 bereitzustellen.

Die Haftzugfestigkeit $R_H$ der Beschichtung beträgt vorzugsweise mehr als 70 MPa, so dass ein Ablösen der Beschichtung vom Grundsubstrat 4 im Einsatz des Wälzlagers weitgehend verhindert werden kann.

Die beiden Beschichtungsbereiche 5 und 6 weisen vorzugsweise die folgende Legierungszusammensetzung in Gew.-% auf:

$$8\% \le Cr \le 18{,}5\ \%,$$

$$22{,}5\ \% \le Mo \le 33\ \%,$$

$$2{,}55\ \% \le Si \le 3{,}45\%,$$

optional

$$14\ \% \le Ni \le 17\ \%,$$

$$C < 0{,}1\ \%$$

Rest Co und unvermeidbare Verunreinigungen
oder

$$12\% \le Cr \le 19\ \%,$$

$$28\% \le Mo \le 36\ \%,$$

$$3\ \% \le Si \le 4\ \%,$$

$$0{,}5\ \% \le Co \le 2\ \%,$$

$$C < 0{,}1\ \%$$

Rest Ni und unvermeidbare Verunreinigungen.

Die Kobalt oder Nickel basierten Legierungen können sehr hohe Härten aufweisen, welche durch die Ausbildung von Laves-Phasen bereitgestellt werden. Eine weitere Verbesserung der Verschleißeigenschaften wird vorzugsweise dadurch erreicht, dass die Beschichtung im ersten Beschichtungsbereich 5 zumindest teilweise eine Mischung aus mindestens einer metallischen Legierung und mindestens einem unlegierten Metall aufweist. Der Gesamtanteil des unlegierten Metalls kann dabei maximal 60 Gew.-%, bevorzugt 15 bis 50 Gew.-% betragen. Als unlegierte Metalle kommen Co, Cr, Mo, Ta, Ni, Cu, Al, In, Zn oder eine Mischung aus mindestens zwei der genannten Metalle in Frage. Eine bevorzugte Mischung besteht aus der oben genannten Kobalt basierten Legierung mit einem Anteil von bis maximal 60 Gew.-% Nickel, bevorzugt 15 bis 50 Gew.-% Nickel.

Eine mikroskopische Aufnahme eines Schnittes durch die Lagerfläche eines erfindungsgemäßen Bauteils zeigt Fig. 2. Hier ist das Grundsubstrat 4 zu erkennen, welches aus einer Titanlegierung oder beispielsweise, wie dargestellt aus Stahl bestehen kann. Auf dem Grundsubstrat 4 sind zwei Beschichtungsbereiche 5 und 6 zu erkennen, welche unterschiedliche Zusammensetzungen aufweisen. Die Beschichtungen 5 und 6 wurden durch Hochgeschwindigkeitsflammspritzen auf das Substrat aufgebracht. Die Zusammensetzung der Schichten entspricht dem des Ausführungsbeispiels E mit den Zusammensetzungen E.1 und E.2 in Tabelle 3. Die Gesamtdicke war mit 844 $\mu$m und die Dicke des ersten Beschichtungsbereichs 5 mit 321 $\mu$m größer als im Ausführungsbeispiel E.

Zu erkennen ist, dass die Anzahl der Fehlstellen in dem Beschichtungsbereich 5 im Vergleich zum Beschichtungsbereich 6 geringer ist. Diese sind an den "schwarzen" Punkten zu erkennen. Beide Schichten unterscheiden sich lediglich darin, dass im Beschichtungsbereich 5 ein Anteil an unlegiertem Nickel von 15 bis 50 Gew.-% enthalten ist. Es wird daher davon ausgegangen, dass das unlegierte Nickel entsprechende Fehlstellen in der Schicht besetzen oder "ausschmieren" kann, um eine verbesserte Haftung am Grundsubstrat zu erreichen. Die Haftzugfestigkeit war bei den Schichten mit einem entsprechenden Anteil an unlegiertem Nickel besonders hoch, wie der Tabelle 4 entnommen werden kann.

Bevorzugt wird das unlegierte Metall während des Hochgeschwindigkeitsflammspritzen separat aufgespritzt, um eine möglichst homogene Verteilung des unlegierten Metalls in der metallischen Legierung zu erreichen. Da beim Hochgeschwindigkeitsflammspritzen pulverförmige Werkstoffe aufgespritzt werden können, kann auch durch eine Agglomeration des unlegierten Metalls mit den Pulverpartikeln der metallischen Legierung vor dem Hochgeschwindigkeitsflammspritzen eine sehr gute Verteilung des unlegierten Metalls in der Beschichtung erreicht werden. Mit Agglomerieren oder Agglomeration ist gemeint, dass die Pulverpartikel des unlegierten Metalls und der metallischen Legierung "verklebt" werden, so dass eine Auftrennung und Entmischung der verschiedenen Werkstoffe während der Verarbeitung beim Hochgeschwindigkeitsflammspritzen nicht erfolgen kann.

Nach einer spanenden Oberflächenbearbeitung, beispielsweise durch Fräsen, Schleifen und Polieren können kleine Rauheiten Ra von 0,1 $\mu$m bis 2,5 $\mu$m, bevorzugt 0,1 $\mu$m bis 1,2 $\mu$m erzielt werden. Die Porosität der beschichteten Fläche beträgt vorzugsweise weniger als 1,5 %. Der Beschichtungsbereich 6 kann somit vorzugsweise einen Schmierstoff zur Bereitstellung verbesserter Reibungseigenschaften im Wälzlager aufweisen. Wertangaben siehe oben.

Es wurden nun unterschiedliche Beschichtungen auf einem Grundsubstrat 4 aus Stahl erzeugt. Bei allen Beschichtungen wurde ein Hochgeschwindigkeitsflammspritzen mit flüssigen Brennstoffen zum Auftragen der Beschichtung auf das Grundsubstrat verwendet. Dabei wurden zwei metallische Kobalt basierte Legierungen 1 und 2 verwendet, welche unterschiedliche Härten bereitstellen können. Die Zusammensetzung kann der Tabelle 1 entnommen werden.

Tabelle 1

| Legierungs-Nr. | Legierungszusammensetzung [Gew.-%] | | | | | | |
|---|---|---|---|---|---|---|---|
| | Co | Cr | Mo | Si | Ni | Fe | C |
| 1 | Rest | 16,5 - 18,5 | 27,5 - 29,5 | 2,4 - 4,4 | ≤1,5 | ≤ 1,5 | < 0,1 |
| 2 | Rest | 7,5 - 9,5 | 27,5 - 29,5 | 1,6 - 3,6 | ≤1,5 | ≤ 1,5 | < 0,1 |

Ausgehend von den beiden Legierungssystemen wurden fünf verschiedene Beschichtungen erzeugt und anschließend in Bezug auf die Haftzugfestigkeit $R_H$ und deren Deckschichthärten untersucht. Die untersuchten Beschichtungen zeigt Tabelle 2. Die Schichten gemäß der Versuche A, B und C stellen Vergleichsbeispiele dar, während Versuch D und E erfindungsgemäße Ausführungsbeispiele der vorliegenden Erfindung sind.

Die Beschichtungen wurden alle, wie bereits ausgeführt, durch Hochgeschwindigkeitsflammspritzen unter Verwendung von flüssigen Brennstoffen erzeugt und im erzeugten, also nicht spanend bearbeiteten Zustand einer Messung der Haftzugfestigkeit $R_H$ nach gemäß DIN EN ISO 14916:2017-8 sowie einer Härtemessung in HRc der Decksicht unterzogen. Die eigentliche Härtemessung erfolgte in Vickers-Härte und wurde gemäß Umrechnungstabelle nach ISO 18265:2013 in HRc umgerechnet. Mit dem Begriff "Deckschicht" ist hier die Lagerfläche, also die Kontaktfläche des zweiten Beschichtungsbereichs 6 mit dem Wälzkörper 3 gemeint. Bei der Messung der Haftzugfestigkeit $R_H$ wurden Proben mit 25 mm Durchmesser verwendet.

Tabelle 2

| Versuch | Schichtanzahl | Schicht | Schichttyp | Dicke [mm] | Kommentar |
|---|---|---|---|---|---|
| A | 1 | | Leg. 1 | 0,8 | Nur Legierung |
| B | 1 | | 50 % Leg.1 + 50 % Leg. 2 | 0,8 | Beide Legierungen als Pulvermischung verarbeitet |
| C | 1 | | Leg. 2 | 0,8 | Nur Legierung |
| D | 2 | D.1 | Leg. 2 + 15-50% Ni | 0,26 | Legierung und unlegiertes Metall als Pulvermischung verarbeitet |
| D | 2 | D.2 | Leg.2 | 0,27 | Nur Legierung |
| E | 2 | E.1 | Leg. 2 + 15-50% Ni | 0,26 | Legierung und unlegiertes Metall bei der Verarbeitung (separat aufgespritzt ) |
| E | 2 | E.2 | Leg.2 | 0,27 | Nur Legierung |

In den Versuchen A, B und C wurden Beschichtungen aus den Legierungen 1 (A) oder 2 (C) respektive einem Gemisch beider Legierungen (B) untersucht. Es zeigte sich, dass die härtere Legierung 1 die geringsten Haftzugfestigkeiten $R_H$ von 45 MPa bei sehr hoher Härte von 63 HRc erzielte. Trotz der Steigerung der Haftzugfestigkeit $R_H$ auf 70 MPa bei der etwas weicheren Legierung 2 bei etwas geringerer Härte von 60 HRc war insbesondere die Haftzugfestigkeit $R_H$ verbesserungswürdig.

Die erfindungsgemäßen Ausführungsbeispiele Versuche D und E weisen zwei Beschichtungsbereiche auf, nämlich D.1 und D.2 sowie E.1 und E.2. Die Schichten D.1 und E.1 bilden bei den Ausführungsbeispielen den ersten Beschichtungsbereich 5 und die Schichten D.2 und E.2 den zweiten Beschichtungsbereich 6 des erfindungsgemäßen Bauteils 1.

Im Versuche D wurden im Unterschied zu Versuch E das unlegierte Metall in Pulverform direkt mit dem Pulver der metallischen Legierung im Hochgeschwindigkeitsflammspritzen verarbeitet. Es wird vermutet, dass die niedrigeren Werte für die Haftzugfestigkeit $R_H$ auf Entmischungsvorgänge bei der Verarbeitung des Pulvergemisches zurückgeführt werden können. Durch separates Aufspritzen von unlegiertem Nickel in einem Anteil von 15 bis 50 Gew.-% im ersten Beschichtungsbereich des Versuchs E konnten die höchsten Haftzugfestigkeiten $R_H$ von mehr als 90 MPa gemessen werden. Die Deckschichthärte blieb dabei mit 60 HRC und 58,3 HRc moderat.

Da die Härte des ersten Beschichtungsbereichs D.1 und E.1 nicht ohne Zerstörung der beschichteten Oberflächen gemessen werden können, wurde eine Härtemessung an einer einschichtigen Beschichtung mit 0,8 mm Dicke bestehend aus einer Mischung aus der Legierung Nr. 2 und 15 Gew.-% unlegiertem Nickel durchgeführt.

Diese ergab eine Härte von 56 HRc, so dass die Härte der Beschichtung der ersten Beschichtungsbereiche D.1 und E.1 geringer ist, als die Härte der Bereiche D.2 und E.2 mit Härten von 60 HRc und 58.3 HRc.

Es wird erwartet, dass aufgrund der optimierten Haftzugfestigkeiten $R_H$ in Verbindung mit der abgestimmten Härte der Deckschichten die Versuche D und E besonders verschleißarme Lagerflächen für Wälzlager bereitstellen.

Tabelle 4

| Schicht | Schichtdicke [mm] | Grundsubstrat | Haftzugfestigkeit $R_H$ [MPa] | Härte der Deckschicht [HRc] |
|---|---|---|---|---|
| A | 0,8 | Stahl | 33 | 63 |
| B | 0,8 | Stahl | 45 | 61 |
| C | 0,8 | Stahl | 70 | 60 |
| D | 0,52 | Stahl | 72 | 60 |
| E | 0,52 | Stahl | 91 | 58,3 |

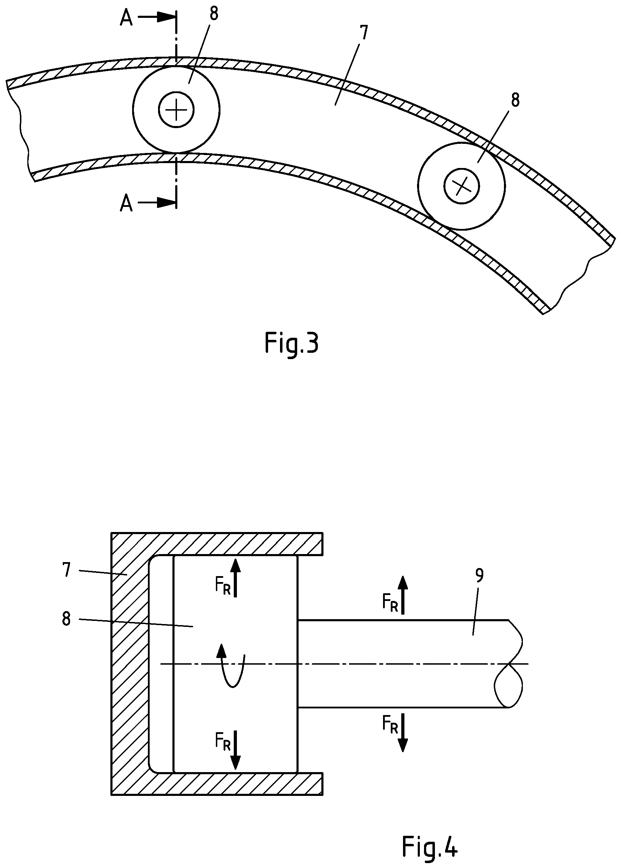

Schließlich zeigt Fig. 3 schematisch in einer Schnittansicht ein Ausführungsbeispiel eines erfindungsgemäßen Bauteils in Form einer Schienenführung 7, welche für zwei Zylinderrollen 8 Lagerflächen bereitstellt. Die Lagerflächen sind in der Schienenführung 7 der Zylinderrollen 8 vorgesehen. Die Schienenführung 7 dient als Rollenbahn für die Zylinderrollen 8, welche dadurch geführt werden. Derartige Schienenführungen 7 werden beispielsweise für Flügelklappen von Flugzeugen verwendet. Die Wälzlager bestehend aus Schienenführung 7 zur Bereitstellung der Lagerflächen und den Zylinderrollen 8 als Wälzkörper müssen im Flugbetrieb sehr hohe Radialkräfte aufnehmen. Die Radialkräfte $F_R$ verlaufen senkrecht zur Drehachse der Zylinderrollen 8.

Der Schnitt A aus Fig. 3 ist in Fig. 4 dargestellt und zeigt, wie die Radialkräfte $F_R$ im Wälzlager auftreten. Die Schienenführungen 7 führen die Zylinderrollen 8, welche über eine schematisch dargestellte Halterung 9 beispielsweise mit einer Flügelklappe eines Flugzeugs verbunden sind. Im Betrieb können dann Radialkräfte über die Halterung 9 auf die Zylinderrollen 8 und damit auf die Schienenführungen 7 und deren beschichteter Lagerflächen übertragen werden. Die Radialkräfte erhöhen die Flächenpressungen im linienförmigen Wälzkontakt der Zylinderrollen 8 auf den Lagerflächen der Schienenführung 7. Die erfindungsgemäßen Schienenführungen 7 können aufgrund ihrer Eignung für sehr hohe Flächenpressungen der Lagerflächen besonders gute Verschleiß- und Rollbedingungen trotz hoher Lasten in dieser Anwendung bereitstellen.

## Patentansprüche

1. Bauteil (1) eines Wälzlagers mit mindestens einem Wälzkörper (3) aufweisend ein Grundsubstrat (4) aus Metall mit mindestens einem Oberflächenbereich, welcher als Lagerfläche (2) des Wälzlagers mit mindestens einem Wälzkörper (3) ausgebildet ist,

   wobei der mindestens eine Oberflächenbereich des Bauteils (1) eine Beschichtung aufweist, welche in einem an das Grundsubstrat (4) des Bauteils angrenzenden, ersten Beschichtungsbereich (5) eine erste Härte aufweist und in einem mit dem mindestens einen Wälzkörper (3) in Kontakt stehenden, zweiten Beschichtungsbereich (6) eine zweite Härte aufweist und die erste Härte geringer ist als die zweite Härte, wobei der erste und der zweite Beschichtungsbereich auf dem Grundsubstrat in Richtung des Wälzkörpers beginnend mit dem ersten und abschließend mit dem zweiten Beschichtungsbereich als Schichten parallel zum Grundsubstrat ausgebildet sind, **dadurch gekennzeichnet, dass** die Beschichtung eine metallische Legierung mit den folgenden Legierungsbestandteilen in Gew.-% aufweist:

$$8\% \leq Cr \leq 18{,}5\ \%,$$

$$22{,}5\ \% \leq Mo \leq 33\ \%,$$

$$2{,}55\ \% \leq Si \leq 3{,}45\%,$$

optional

$$14\ \% \leq Ni \leq 17\ \%,$$

$$C < 0{,}1\ \%$$

Rest Co und unvermeidbare Verunreinigungen
oder

$$12\% \leq Cr \leq 19\ \%,$$

$$28\% \leq Mo \leq 36\ \%,$$

$$3\ \% \leq Si \leq 4\ \%,$$

$$0,5\ \% \leq Co \leq 2\ \%,$$

$$C < 0,1\ \%$$

Rest Ni und unvermeidbare Verunreinigungen.

2. Bauteil nach Anspruch 1,
   **dadurch gekennzeichnet, dass**
   die zweite Härte des zweiten Beschichtungsbereichs (6) des Bauteils (1) größer ist als die Härte des Oberflächenbereichs des mindestens einen Wälzkörpers (3).

3. Bauteil nach Anspruch 1 oder 2,
   **dadurch gekennzeichnet, dass**
   die Beschichtung des Bauteils (1) einen Härtegradienten aufweist, derart, dass die Härte der Beschichtung von dem zum Grundsubstrat des Bauteils (1) angrenzenden, ersten Beschichtungsbereichs (5) zum zweiten Beschichtungsbereich (6), welcher mit dem Wälzkörper in Kontakt steht, ansteigt, optional kontinuierlich oder schichtweise ansteigt.

4. Bauteil nach einem der Ansprüche 1 bis 3,
   **dadurch gekennzeichnet, dass**
   die erste Härte im an das Grundsubstrat (4) angrenzenden, ersten Beschichtungsbereich (5) maximal 60 HRc und die zweite Härte im mit dem Wälzkörper (3) in Kontakt stehenden zweiten Beschichtungsbereich (6) mindestens 57 HRc beträgt.

5. Bauteil nach einem der Ansprüche 1 bis 4,
   **dadurch gekennzeichnet, dass**
   das Bauteil (1) eine Schienenführung (7) zur Aufnahme mindestens einer Zylinderrolle (8) als Wälzkörper (3) eines Wälzlagers ist und der beschichtete Oberflächenbereich sich teilweise oder zumindest im gesamten Bewegungsbereich der mindestens einen Zylinderrolle (8) in der Schienenführung (7) erstreckt.

6. Bauteil nach einem der Ansprüche 1 bis 5,
   **dadurch gekennzeichnet, dass**
   die Haftzugfestigkeit $R_H$ der Beschichtung mehr als 70 MPa beträgt.

7. Bauteil nach einem der Ansprüche 1 bis 6,
   **dadurch gekennzeichnet, dass**
   die Beschichtung im ersten Beschichtungsbereich (5) eine Mischung aus mindesten einer metallischen Legierung und mindestens einem unlegierten Metall aufweist, wobei der Gesamtanteil des unlegierten Metalls im Beschichtungsbereich (5) maximal 60 Gew.-%, bevorzugt 15 bis 50 Gew.-% beträgt und das mindestens eine unlegierte Metall Co, Ni, Cr, Mo, Ta, Cu, Al, In, Zn oder eine Mischung aus mindestens zwei der genannten Metalle ist.

8. Bauteil nach einem der Ansprüche 1 bis 7,
   **dadurch gekennzeichnet, dass**
   die Beschichtung durch Hochgeschwindigkeitsflammspritzen oder Laserpulverschweißen aufgebracht worden ist.

9. Bauteil nach einem der Ansprüche 1 bis 8,
   **dadurch gekennzeichnet, dass**
   die Beschichtung eine Oberflächenrauheit Ra von mindestens 0,1 $\mu$m bis 2,5 $\mu$m, bevorzugt 0,1 $\mu$m bis 1,2 $\mu$m aufweist.

10. Bauteil nach einem der Ansprüche 1 bis 9,
    **dadurch gekennzeichnet, dass**
    die Beschichtung eine Porosität von kleiner 1,5 % aufweist.

11. Bauteil nach einem der Ansprüche 1 bis 11,
    **dadurch gekennzeichnet, dass**
    das Bauteil (1) ein Teil eines Wälzlagers eines Transportmittels, vorzugsweise eines Flugzeugs ist.

**12.** Verfahren zur Herstellung eines Bauteils (1) eines Wälzlagers mit mindestens einem Wälzkörper mit mindestens einem beschichteten Oberflächenbereich nach einem der Ansprüche 1 bis 11, bei welchem die Beschichtung des Oberflächenbereichs des Bauteils, welcher zur Bereitstellung einer Lagerfläche eines Wälzlagers dient, durch ein Hochgeschwindigkeitsflammspritzen aufgebracht wird und die Beschichtung nach dem Hochgeschwindigkeitsflammspritzen zumindest einer spanenden Oberflächenbearbeitung unterzogen wird,

wobei der an das Grundsubstrat angrenzende erste Beschichtungsbereich (5) und der zweite mit dem Wälzkörper (3) in Kontakt stehende Beschichtungsbereich (6) des Bauteils durch Hochgeschwindigkeitsflammspritzen von unterschiedlichen Beschichtungszusammensetzungen erzeugt wird, **dadurch gekennzeichnet, dass** die Beschichtung eine metallische Legierung mit folgenden Legierungsbestandteilen in Gew.-% aufweist:

$$8\% \leq Cr \leq 18{,}5\ \%,$$

$$22{,}5\ \% \leq Mo \leq 33\ \%,$$

$$2{,}55\ \% \leq Si \leq 3{,}45\%,$$

optional

$$14\ \% \leq Ni \leq 17\ \%,$$

$$C < 0{,}1\ \%,$$

Rest Co und unvermeidbare Verunreinigungen
oder

$$12\% \leq Cr \leq 19\ \%,$$

$$28\% \leq Mo \leq 36\ \%,$$

$$3\ \% \leq Si \leq 4\ \%,$$

$$0{,}5\ \% \leq Co \leq 2\ \%,$$

$$C < 0{,}1\ \%,$$

Rest Ni und unvermeidbare Verunreinigungen.

**13.** Verfahren nach Anspruch 12,
**dadurch gekennzeichnet, dass**
der erste Beschichtungsbereich (5) der Beschichtung, welcher an das Grundsubstrat angrenzt durch Hochgeschwindigkeitsflammspritzen einer Mischung aus mindestens einer metallischen Legierung und mindestens einem unlegierten Metall erzeugt wird, wobei der Gesamtanteil des unlegierten Metalls in der Beschichtung bereichsweise maximal 60 Gew.-%, bevorzugt 15 bis 50 Gew.-% beträgt und das mindestens eine unlegierte Metall Co, Cr, Mo, Ta, Ni, Cu, Al, In, Zn oder eine Mischung aus mindestens zwei der genannten Metalle ist.

**14.** Verfahren nach einem der Ansprüche 12 oder 13,
**dadurch gekennzeichnet, dass**

während des Hochgeschwindigkeitsflammspritzens das unlegierte Metall separat zur metallischen Legierung aufgespritzt oder vor dem Aufspritzen mit der mindestens einen metallischen Legierung vor der Verarbeitung im Hochgeschwindigkeitsflammspritzen gemischt oder agglomeriert wird.

**Claims**

1. Component (1) of a rolling bearing with at least one rolling element (3) comprising

a base substrate (4) made of metal with at least one surface area which is designed as bearing surface (2) of the rolling bearing with at least one rolling element (3),
whereby the at least one surface region of the component (1) comprising a coating which has a first coating region (5) adjacent to the base substrate (4) of the component having a first hardness and a second coating region (6) in contact with at least one rolling element (3) with a second hardness and the first hardness is lower than the second hardness, wherein the first and second coating regions are formed on the base substrate in the direction of the rolling element starting with the first and ending with the second coating region as layers parallel to the base substrate,
**characterized in that**
the coating is a metal alloy comprising the following
alloying constituents in wt.-%:

$$8\ \% \le Cr \le 18.5\ \%,$$

$$22{,}5\ \% \le Mo \le 33\ \%,$$

$$2{,}55\ \% \le Si \le 3.45\ \%,$$

optionally

$$14\ \% \le Ni \le 17\ \%,$$

$$C < 0{,}1\ \%$$

residual Co and unavoidable impurities
or

$$12\ \% \le Cr \le 19\ \%,$$

$$28\ \% \le Mo \le 36\ \%,$$

$$3\ \% \le Si \le 4\ \%,$$

$$0.5\ \% \le Co \le 2\ \%,$$

$$C < 0{,}1\ \%$$

Residual Ni and unavoidable impurities.

**2.** Component according to claim 1,
**characterized by** the fact that
the second hardness of the second coating area (6) of the component (1) is greater than is greater than the hardness of the surface area of the at least one rolling element (3).

**3.** Component according to claim 1 or 2,
**characterized in that**
the coating of the component (1) has a hardness gradient such that the hardness of the coating from the first coating area (5) adjacent to the base substrate of the component (1) to the second coating area (6), which is in contact with the rolling element, rises, optionally continuously or in layers.

**4.** Component according to any one of claims 1 to 3,
**characterized in that**
the first hardness in the first coating area (5) adjacent to the base substrate (4) is at most 60 HRc and the second hardness in the second coating area (6) in contact with the rolling element (3) is at least 57 HRc.

**5.** Component according to any one of claims 1 to 4,
**characterized in that**
the component (1) is a rail guide (7) for receiving at least one cylindrical roller (8) as a rolling element (3) of a rolling bearing and the coated surface region extends partially or at least over the entire surface region over which the cylindrical roller (8) is moved in the rail guide (7).

**6.** Component according to any one of claims 1 to 6 **characterized in that** the adhesive tensile strength $R_H$ of the coating is more than 70 MPa.

**7.** Component according to any one of claims 1 to 6,
**characterized in that**
the coating in the first coating region (5) has a mixture of at least one metallic alloy and at least one unalloyed metal, the total proportion of unalloyed metal in the coating region (5) being at most 60% by weight, preferably 15 to 50% by weight, and the at least one unalloyed metal being Co, Ni, Cr, Mo, Ta, Cu, Al, In, Zn or a mixture of at least two of the metals mentioned.

**8.** Component according to any one of claims 1 to 7,
**characterized in that**
the coating by high velocity flame spraying or laser powder welding.

**9.** Component according to any one of claims 1 to 8,
**characterized in that**
the coating has a surface roughness Ra of at least 0.1 $\mu$m to 2.5 $\mu$m, preferably 0.1 $\mu$m to 1.2 $\mu$m.

**10.** Component according to any one of claims 1 to 9,
**characterized in that**
the coating has a porosity of less than 1.5 %.

**11.** Component according to one of claims 1 to 11,
**characterized in that**
the component (1) is a part of a rolling bearing of a means of transportation, preferably of an airplane.

**12.** Method of manufacturing a component (1) of a rolling bearing with at least a rolling element with at least one coated surface area according to any one of claims 1 to 11, wherein the coating of the surface portion of the component which is used to provide a bearing surface of a rolling bearing by means of a high-speed flame spraying process. and the coating is applied after the high-speed flame spraying is subjected to at least one machining surface treatment,

whereby
the first coating area (5) adjacent to the base substrate and the second coating area (6) in contact with the rolling element (3) of the component is produced by high-speed flame spraying of different coating compositions,
**characterized in that**
the coating has a metallic alloy with the following alloy components in wt.-%:

$$8\% \leq Cr \leq 18.5\ \%,$$

$$22.5\ \% \leq Mo \leq 33\ \%,$$

$$2{,}55\ \% \leq Si \leq 3.45\ \%,$$

optionally

$$14\ \% \leq Ni \leq 17\ \%,$$

$$C < 0{,}1\ \%,$$

residual Co and unavoidable impurities
or

$$12\ \% \leq Cr \leq 19\ \%,$$

$$28\ \% \leq Mo \leq 36\ \%,$$

$$3\ \% \leq Si \leq 4\ \%,$$

$$0.5\ \% \leq Co \leq 2\ \%,$$

$$C < 0{,}1\ \%$$

residual Ni and unavoidable impurities.

13. Method according to claim 12,
**characterized in that**
the first coating region (5) of the coating adjacent to the base substrate is produced by high velocity flame spraying a mixture of at least one metallic alloy and at least one unalloyed metal, the total part of the unalloyed metal in the coating in some areas is at maximum of 60 wt.-%, preferably 15 wt.-% to 50 wt.-% and the at least one unalloyed metal is Co, Cr, Mo, Ta, Ni, Cu, Al, In, Zn or a mixture of at least two of the metals mentioned.

14. The method according to any one of claims 12 or 13,
**characterized in that**
during high-speed flame spraying, the unalloyed metal is sprayed separately to the metallic alloy or is mixed or agglomerated with the at least one metallic alloy prior to spraying before processing in high-speed flame spraying.

**Revendications**

1. Composant (1) d'un palier à roulement avec au moins un élément roulants (3) présentant un substrat de base (4) en métal ayant au moins une zone de surface sous la forme d'un surface de palier (2) du palier à roulement avec au moins un élément roulants (3), selon lequel au moins une zone de surface du composant (1) présente un revêtement qui, dans une première zone de revêtement (5) adjacente au substrat de base (4) du composant, présente une première dureté et, dans une seconde zone de revêtement (6) en contact avec au moins un élément de roulants (3) une deuxième dureté, et la première dureté est inférieure à la seconde dureté, les première et seconde zones de revêtement étant disposées sur le substrat de base en direction du élément roulants, en commençant par la première zone de revêtement et en terminant par la seconde zone de revêtement, sous la forme de couches parallèles a substrat de base,
**caractérisé en ce que**

le revêtement est un alliage métallique présentant les ingrédients d'alliage suivantes en % en poids :

$$8\% \leq Cr \leq 18,5\ \%,$$

$$22,5\ \% \leq Mo \leq 33\ \%,$$

$$2,55\ \% \leq Si \leq 3,45\%,$$

en option

$$14\ \% \leq Ni \leq 17$$

$$C < 0,1\ \%$$

le reste étant du Co et des impuretés inévitables
ou

$$12\ \% \leq Cr \leq 19\ \%,$$

$$28\ \% \leq Mo \leq 36\ \%,$$

$$3\ \% \leq Si \leq 4\ \%,$$

$$0,5\ \% \leq Co \leq 2\ \%,$$

$$C < 0,1\ \%$$

le reste étant du Ni et des impuretés inévitables.

2. Composant selon la revendication 1,
   **caractérisé en ce que**
   la deuxième dureté de la deuxième zone de revêtement (6) de la composant (1) est supérieure à la dureté de la zone de surface dudit au moins un élément de roulants (3).

3. Composant selon la revendication 1 ou 2,
   **caractérisé en ce que**
   le revêtement du composant (1) présente un gradient de dureté tel que la dureté du revêtement de la première zone de revêtement (5) adjacente au substrat de base du composant (1) à la deuxième zone de revêtement (6) qui est en contact avec l'élément de roulement, augmente, éventuellement de manière continue ou par couches.

4. Composant selon l'une des revendications 1 à 3,
   **caractérisé en ce que**

la première dureté dans la première zone de revêtement (5) adjacente au substrat de base (4) est de 60 HRc au maximum et la deuxième dureté dans la deuxième zone de revêtement (6) en contact avec l'élément roulants (3) est d'au moins 57 HRc.

5. Composant selon l'une des revendications 1 à 4,
**caractérisé en ce que**
le composant (1) est un guide de rail (7) destiné à recevoir au moins un rouleau cylindrique (8) en tant qu'élément roulants (3) d'un palier à roulement et la zone de surface revêtue s'étend partiellement ou au moins sur toute la surface du guide de rail (7)de mouvement de l'au moins un rouleau cylindrique (8) dans le guide de rail (7).

6. Composant selon l'une des revendications 1 à 5,
**caractérisé en ce que**
la résistance à l'arrachement $R_H$ du revêtement est supérieure à 70 MPa.

7. Composant selon l'une quelconque des revendications 1 à 6,
**caractérisé en ce que**
le revêtement présente dans la première zone de revêtement (5) un mélange d'au moins un alliage métallique et d'au moins un métal non allié, la part totale du métal non allié dans la zone de revêtement (5) étant au maximum de 60 % en poids, de préférence de 15 à 50 % en poids, et le au moins un métal non allié étant Co, Ni, Cr, Mo, Ta, Cu, Al, In, Zn ou un mélange d'au moins deux des métaux cités.

8. Composant selon l'une quelconque des revendications 1 à 7,
**caractérisé en ce que**

le revêtement par pulvérisation à la flamme à grande vitesse, ou
a été appliqué par soudage au laser.

9. Composant selon l'une quelconque des revendications 1 à 8,
**caractérisé en ce que**
le revêtement présente une rugosité de surface Ra d'au moins 0,1 $\mu$m à 2,5 $\mu$m, de préférence de 0,1 $\mu$m à 1,2 $\mu$m.

10. Composant selon l'une quelconque des revendications 1 à 9,
**caractérisé en ce que**
le revêtement présente une porosité inférieure à 1,5 %.

11. Elément de construction selon l'une des revendications 1 à 11,
**caractérisé en ce que**
le composant (1) est une partie d'un palier à roulement d'un moyen de transport, de préférence d'un avion.

12. Procédé de fabrication d'un composant (1) d'un palier à roulement avec au moins un élément de roulants ayant au moins une zone de surface revêtue selon l'une des revendications 1 à 11, dans lequel le revêtement de la zone de surface de l'élément, qui est destiné à fournir une surface de palier du palier à roulement, est appliquée par une projection à la flamme à grande vitesse

et que le revêtement est retiré après la projection à la flamme à grande vitesse est soumise au moins à un traitement de surface par enlèvement de copeaux, selon lequel la première zone de revêtement (5) adjacente au substrat de base et la deuxième zone de revêtement (6) en contact avec l'élément roulant (3) de la pièce est produite par pulvérisation à la flamme à grande vitesse de différentes compositions de revêtement, **caractérisé en ce que** le revêtement est une alliage métallique comprenant les ingrédients d'alliage suivants en % en poids :

$$8\% \leq Cr \leq 18,5\ \%,$$

$$22,5\ \% \leq Mo \leq 33\ \%,$$

$$2{,}55\ \% \le Si \le 3{,}45\%,$$

en option

$$14\ \% \le Ni \le 17$$

$$C < 0{,}1\ \%,$$

le reste étant du Co et des impuretés inévitables
ou

$$12\% \le Cr \le 19\ \%,$$

$$28\% \le Mo \le 36\ \%,$$

$$3\ \% \le Si \le 4\ \%$$

$$0{,}5\ \% \le Co \le 2\ \%,$$

$$C < 0{,}1\ \%$$

le reste étant du Ni et des impuretés inévitables.

**13.** Procédé selon la revendication 12,
**caractérisé en ce que**
la première zone de revêtement (5) du revêtement, qui est adjacente au substrat de base, est produite par pulvérisation à la flamme à grande vitesse d'un mélange d'au moins un alliage métallique et d'au moins un métal non allié, la proportion totale du métal non allié étant dans le revêtement, par zones, au maximum 60% en poids, de préférence 15 à 50% en poids et que le au moins un métal non allié est Co, Cr, Mo, Ta, Ni, Cu, Al, In, Zn ou un mélange d'au moins deux des métaux mentionnés.

**14.** Procédé selon l'une des revendications 12 ou 13,
**caractérisé en ce que**
pendant la projection à la flamme à grande vitesse, le métal non allié est projeté séparément de l'alliage métallique ou est mélangé ou aggloméré avant la projection avec le au moins un alliage métallique avant le traitement dans la projection à la flamme à grande vitesse.

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009023818 A1
- WO 2016011218 A1
- US 20200408261 A1
- DE 102013223677 A1
- WO 2014139941 A1
- GB 2514445 A1
- US 5439297 A
- EP 2669399 A1
- DE 112015002677 T5